# EUROPÄISCHE PATENTANMELDUNG

(11) **EP 1 626 253 A2**
(43) Veröffentlichungstag der Anmeldung: **15.02.2006**
(21) Anmeldenummer: 05015387.3
(22) Anmeldetag: 15.07.2005
(51) Int. Cl.: G01D 7/00, G01D 11/24, G01D 11/26

(54) **Positionsrückmelder**

(30) Priorität: 06.08.2004 DE 102004038385
(71) Anmelder: BöSha GmbH + Co. KG, 59602 Rüthen (DE)
(72) Erfinder: Die Erfindernennung liegt noch nicht vor

(57) **Zusammenfassung**

Eine Positionsrückmelder-Box für die Prozesstechnik soll dahingehend verbessert werden, dass die herkömmlichen, zum Teil nur mühsam erkennbaren Stellungsanzeigeelemente im Positionsrückmelder durch eine von weitem wahrnehmbare ampelartige Anzeige ersetzt werden.

Für diese Verbesserung wird vorgeschlagen, hinter einem Fenster - das auch kuppelförmig ausgebildet sein kann - des Deckels oder des Gehäuses ein Multi-LED-Modul anzubringen, das mit LED zwei verschiedener Farben bestückt ist, die in abwechselnder Folge plaziert sind. Je nach Stellung des Antriebs werden alle LED einer Farbe angeschaltet. Eine Streulichtscheibe vor dem Multi-LED-Modul sorgt für homogene Abstrahlung des Farblichtsignals und lässt diese Anzeige wie ein Ampelsignal wirken.

Die Stromübertragung an das Multi-LED-Modul im Deckel erfolgt optional über Steckkontakte, die gleichzeitig mit dem Schließen des Deckels zusammengesteckt werden bzw. beim Öffnen des Deckels getrennt werden.

## Beschreibung

Positionsrückmelder werden in der Prozesstechnik als Positionsanzeiger für Endlagen oder Zwischenpositionen von Stellantrieben und somit des Stellgliedes eingesetzt. Sie wandeln festgelegte mechanische Positionen des Stellantriebs mit Hilfe von Mikroschaltern oder Sensoren in elektrische Signale um, wodurch die tatsächliche Position des Antriebs und somit des Stellgliedes, vornehmlich der Auf-und Zu-Stellung, an das übergeordnete Leitsystem zurückgemeldet wird. Ebenso kann die Positionsstellung direkt am Positionsrückmelder abgelesen werden. Diese Positionsrückmelder werden bisher in geschlossener Bauform, d.h. zumeist in einer Kunststoff- oder Aluminium-Box, eingesetzt. Aber auch die offene Bauweise, bei der die Sensorik und die Anzeigeelemente in gekapselter Form ohne ein weiteres Gehäuse direkt auf den Stellantrieb montiert werden, wird inzwischen schon häufig verwendet (Siehe: SPS-Magazin, 17. Jahrgang, April 2004, Ausgabe 4, S. 70 f.).

Bei den bisher existierenden Positionsrückmeldern der geschlossenen Bauweise erfolgt die Stellungsanzeige am Gerät über Anzeigeelemente (z.B. drehbare, farblich unterteilte oder mit Pfeilen versehene Scheiben; einzelne LED), die sich zusammen mit der Sensorik im Basisgehäuse befinden und durch ein Sichtfenster im Deckel oder durch einen komplett transparenten Deckel von oben oder von der Seite zu erkennen sind. Die Positionsrückmelder der offenen - also gehäuselosen - Bauweise verfügen über die gleiche Art von Anzeigeelementen.

Ein Manko dieser Positionsrückmelder besteht darin, dass die Stellungsanzeige im oder am Gerät nicht von weitem erkennbar ist. Da die Positionsrückmelder häufig an erhöhten Standorten montiert sind, kann die Stellungsablesung in diesen Fällen oft nur umständlich unter Zuhilfenahme von Leitern oder Hebebühnen erfolgen.

Um die optische Wirksamkeit der Anzeige um ein Vielfaches zu erhöhen, dient bei der vorliegenden Erfindung ein Multi-LED-Modul, das hinter dem transparenten Deckel oder hinter einem Fenster des Deckels oder der Gehäusewand angebracht ist, zur Stellungsanzeige. Das Multi-LED-Modul enthält mehrere LED zwei verschiedener Farben, die in abwechselnder oder blockweiser Folge plaziert sind. Je nach Stellung des Antriebs werden alle LED einer Farbe aktiviert: z.B. grün bei Stellung "Auf" und rot bei Stellung "Zu". Eine Streulichtscheibe, die vor dem Multi-LED-Modul angebracht ist, sorgt dafür, dass das farbige Leuchtsignal homogen abgestrahlt wird und wie ein Ampelsignal wirkt. Die Stromübertragung an das Multi-LED-Modul erfolgt entweder über Anschlusskabel oder bei der Version, bei der sich das Multi-LED-Modul im Deckel befindet, wahlweise auch über Steckkontakte. Bei letzterer Ausführung werden die Kontakte gleichzeitig mit dem Schließen des Deckels zusammengesteckt bzw. bei Öffnen des Dekkels getrennt.

Eine weitere Steigerung der optischen Wirksamkeit der beschriebenen Stellungsanzeige wird durch eine Ausführung erzielt, bei der das Multi-LED-Modul, anstelle hinter einem flachen Sichtfenster oder hinter einem flachen Klarsichtdeckel, in einer transparenten, vom Deckel oder der Gehäusewand erhabenen Kuppel untergebracht ist.

Der Vorteil dieser Arten der Stellungsanzeige besteht darin, dass das Anzeigeelement einer Ampel vergleichbar leuchtet und ohne weitere Hilfsmittel von weitem wahrnehmbar ist. Aus diesem Grund ist es - im Gegensatz zu den bisher existierenden Rückmeldern - nicht mehr notwendig, von oben in das Gerät hineinzuschauen und die Stellungsrückmeldung auf diese umständliche Weise aus der Nähe abzulesen.

Ein Ausführungsbeispiel der Erfindung ist in der Zeichnung dargestellt und wird im folgenden näher beschrieben:

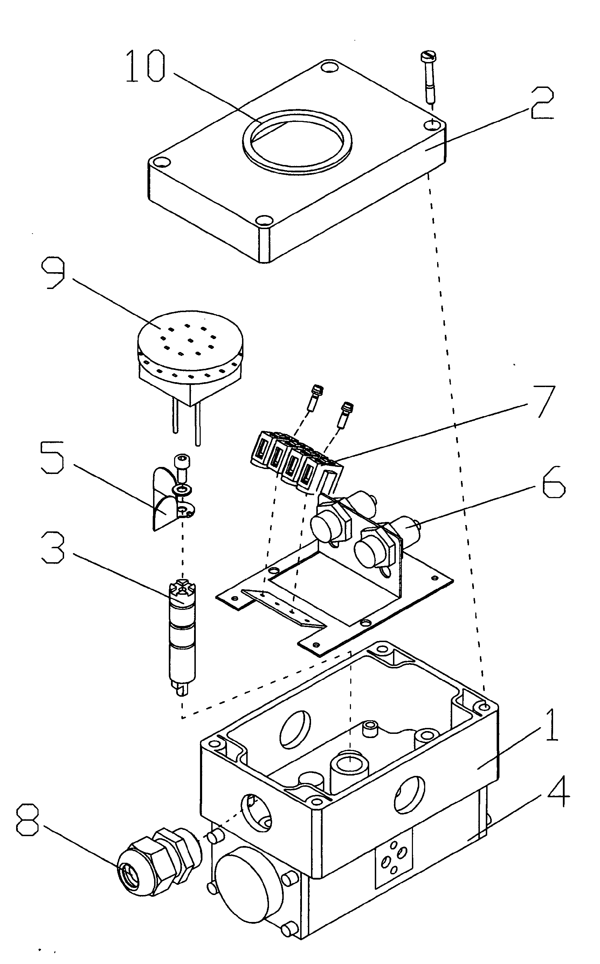

Figur 1 zeigt einen Positionsrückmelder der geschlossenen, d.h. der mit einem Gehäuse 1 und einem Deckel 2 versehenen Bauweise. Über die Welle 3 wird die Stellung des Antriebs 4 und somit des Stellgliedes mechanisch in den Positionsrückmelder übertragen. Die am Kopf der Welle befestigten Schaltelemente 5 betätigen bzw. aktivieren je nach Antriebsstellung einen der Mikroschalter bzw. der Sensoren 6. Das auf diese Weise ausgelöste elektrische Signal wird über die Verkabelung zu den Anschlussklemmen 7 und von dort durch die am Gehäuse angebrachte(n) Kabeleinführung(en) 8 an das übergeordnete Leitsystem (z.B. Stellungsanzeigetafel) weitergegeben. Gleichzeitig werden durch die Mikroschalter bzw. Sensoren in dem angeschlossenen Multi-LED-Modul 9 je nach Antriebsstellung alle LED einer Farbe eingeschaltet. Die Streulichtscheibe 10 sorgt dafür, dass das entstehende farbige Leuchtsignal (z.B. grün oder rot) gleichmäßig abgestrahlt wird und den Effekt eines Ampelsignals hat.

## Patentansprüche

1. Positionsrückmelder-Box für die Prozesstechnik, bestehend aus einem undurchsichtigen Basisgehäuse mit eingebauter Sensorik und einem ganz oder teilweise transparenten Deckel,
**dadurch gekennzeichnet,**
**dass** hinter dem transparenten Teil des Deckels als Stellungsanzeigeelement ein Multi-LED-Modul mit LED zweier verschiedener Farben, die in abwechselnder oder blockweiser Folge plaziert sind, angebracht ist, wobei eine dem Multi-LED-Modul vorgesetzte Lichtstreuscheibe für eine homogene Abstrahlung des je nach Antriebsstellung abgegebenen Farblichtsignals sorgt und auf diese Weise einen Ampeleffekt erzeugt.

2. Positionsrückmelder-Box für die Prozesstechnik, bestehend aus einem teilweise transparenten Basisgehäuse mit eingebauter Sensorik und einem undurchsichtigen Deckel,
**dadurch gekennzeichnet,**
**dass** hinter dem transparenten Teil des Basisgehäuses als Stellungsanzeigeelement ein Multi-LED-Modul mit LED zweier verschiedener Farben, die in abwechselnder oder blockweiser Folge plaziert sind, angebracht ist, wobei eine dem Multi-LED-Modul vorgesetzte Lichtstreuscheibe für eine homogene Abstrahlung des je nach Antriebsstellung abgegebenen Farblichtsignals sorgt und auf diese Weise einen Ampeleffekt erzeugt.

3. Positionsrückmelder-Box nach Patentanspruch 1,
**dadurch gekennzeichnet,**
**dass** ein Teil des Deckels als transparente Kuppel zur Aufnahme des Multi-LED-Moduls und der Streulichtscheibe ausgebildet ist.

4. Positionsrückmelder-Box nach Patentanspruch 2,
**dadurch gekennzeichnet,**
**dass** ein Teil des Basisgehäuses als transparente Kuppel zur Aufnahme des Multi-LED-Moduls und der Streulichtscheibe ausgebildet ist.

5. Positionsrückmelder-Box nach Patentanspruch 1 oder 3,
**dadurch gekennzeichnet,**
**dass** die Stromübertragung zum Multi-LED-Modul im Deckel über Steckkontakte erfolgt, die gleichzeitig mit dem Schließen des Deckels zusammengesteckt werden bzw. mit dem Öffnen des Deckels getrennt werden.
